# EUROPÄISCHE PATENTSCHRIFT

(11) **EP 4 304 882 B1**
(45) Veröffentlichungstag und Bekanntmachung des Hinweises auf die Patenterteilung: **10.07.2024**
(21) Anmeldenummer: 22702466.8
(22) Anmeldetag: 28.01.2022
(51) Int. Cl.: B60K 6/48, B60K 6/365, B60K 6/547, B60K 6/387

(54) **HYBRIDANTRIEBSSYSTEM**
HYBRID DRIVE SYSTEM
SYSTÈME À MOTORISATION HYBRIDE

(30) Priorität: 11.03.2021 DE 102021001315
(43) Veröffentlichungstag der Anmeldung: 17.01.2024
(73) Patentinhaber: Mercedes-Benz Group AG, 70372 Stuttgart (DE)
(72) Erfinder: GITT, Carsten, 70437 Stuttgart (DE); HAERTER, Tobias, 70174 Stuttgart (DE); HAHN, Peter, 70374 Stuttgart (DE); KOLB, Andreas, 73249 Wernau (DE); RIEDL, Klaus, 72074 Tübingen (DE); SCHILDER, Tobias, 71640 Ludwigsburg (DE); ZEIBIG, Jonathan, 73630 Remshalden (DE)
(74) Vertreter: Novagraaf Group
(86) Internationale Anmeldenummer: PCT/EP2022/052033
(87) Internationale Veröffentlichungsnummer: WO 2022/189065

(56) Entgegenhaltungen:
- DE-A1- 102006 050 598
- US-A1- 2009 209 381
- US-A1- 2010 261 565
- US-A1- 2013 102 430

## Beschreibung

Die Erfindung betrifft ein Hybridantriebssystem mit einem Verbrennungsmotor und einer elektrischen Maschine nach der im Oberbegriff von Anspruch 1 näher definierten Art.

Die DE 10 2013 221 461 A1 zeigt ein Hybridantriebssystem mit einem Verbrennungsmotor, einer elektrischen Maschine und einem Getriebe, das einen vierwelligen Planentenradsatz und zwei Stirnradteilgetriebe aufweist. Weitere Hybridantriebssysteme mit vierwelligen Planetenradsätzen sind aus der

Ein gattungsgemäßes Hybridantriebssystem mit einem Verbrennungsmotor und einer elektrischen Maschine beschreibt beispielsweise die DE 10 2017 006 082 A1 der Anmelderin. Dabei kommt ein vierwelliger Planetenradsatz zum Einsatz, über welchen die elektrische Maschine und der Verbrennungsmotor in das Getriebe des Hybridantriebssystems eingekoppelt sind.

Ferner kann in diesem Zusammenhang auf die US 2013/0102430 A1 hingewiesen werden. Auch sie zeigt ein Hybridantriebssystem mit einem vierwelligen Planetenradsatz und zwei Stirnradteilgetrieben, zwischen welchen zentral der Abtrieb zu einem Differential über eine Vorgelegewelle realisiert ist. Weitere Hybridantriebssysteme mit vierwelligen Planetenradsätzen sind aus der US 2009/209381 A1, der DE 10 2006 050 598 A1 sowie der US 2010/261565 A1 bekannt.

Der Aufbau im zuerst genannten Stand der Technik weist eine hohe Komplexität bei der Realisierung von vielen Funktionen auf, der im zweiten Stand der Technik genannte Aufbau ist zwar einfacher, benötigt aber sehr viel Bauraum, insbesondere in axialer Richtung, also in der Richtung der Hauptgetriebeachse bzw. der Eingangswellen der beiden Stirnradteilgetriebe.

Die Aufgabe der hier vorliegenden Erfindung besteht nun darin, einen einfachen und vor allem in axialer Richtung sehr kompakten Aufbau mit einer großen Zahl sinnvoller Getriebefunktionen anzugeben.

Erfindungsgemäß wird diese Aufgabe durch ein Hybridantriebssystem mit den Merkmalen im Anspruch 1, und hier insbesondere im kennzeichnenden Teil des Anspruchs 1 gelöst. Vorteilhafte Ausgestaltungen und Weiterbildungen des erfindungsgemäßen Hybridantriebssystems ergeben sich aus den hiervon abhängigen Unteransprüchen.

Das erfindungsgemäße Hybridantriebssystem dient insbesondere als Fahrzeugantrieb. Es umfasst einen Verbrennungsmotor und eine bzw. mindestens eine elektrische Maschine, sowie einen vierwelligen Planetenradsatz. Der vierwellige Planetenradsatz ist dabei koaxial zu einer Kurbelwelle des Verbrennungsmotors angeordnet. Daneben sind zwei mechanische Strecken über ein erstes Stirnradteilgetriebe und ein zweites Stirnradteilgetriebe vorgesehen, um entweder über die eine Strecke, die andere Strecke oder beide Strecken Abtriebsenergie abzugeben. Eine erste Welle des Planetenradsatzes ist dafür mit der Kurbelwelle des Verbrennungsmotors gekoppelt oder vorzugsweise über eine Trennkupplung sowie ggf. über einen Drehschwingungsdämpfer koppelbar. Ein Rotor der elektrischen Maschine ist mit einer zweiten Welle des Planetenradsatzes gekoppelt oder koppelbar. Der Rotor der elektrischen Maschine kann auch unmittelbar diese zweite Welle des Planetenradsatzes ausbilden, beispielsweise indem der Rotor der elektrischen Maschine das Hohlrad des Planetenradsatzes ausbildet oder mit diesem unmittelbar verbunden ist. Eine erste Eingangswelle des ersten Stirnradteilgetriebes und eine zweite Eingangswelle des zweiten Stirnradteilgetriebes bilden dann die dritte und die vierte Welle des Planetenradsatzes oder sind bevorzugt drehfest mit diesem verbunden.

Erfindungsgemäß ist es nun so, dass das erste und das zweite Stirnradteilgetriebe jeweils genau eine Stirnradpaarung aufweisen, um so einen einfachen und kompakten Aufbau zu realisieren. Die beiden Stirnradpaarungen des jeweils ersten Stirnradteilgetriebes einerseits und des zweiten Stirnradteilgetriebes andererseits sind so zueinander angeordnet, dass in einer axialen Richtung entlang der beiden Eingangswellen der jeweiligen Stirnradteilgetriebe gesehen, ein Verblockungsschaltelement zum verblocken von zwei der Wellen des Planetenradsatzes zwischen den beiden Stirnradpaarungen angeordnet ist. Der Planetenradsatz verfügt also über ein Verblockungsschaltelement, über welches zwei seiner Wellen entsprechend verbunden werden können, um den Planetenradsatz zu verblocken, sodass dieser im Block, ohne eine Relativbewegung seiner Komponenten zueinander, umläuft. Dieses Verblockungsschaltelement ist axial zwischen den beiden Stirnradpaarungen und damit axial zwischen den beiden Stirnradteilgetrieben angeordnet. Dadurch wird in axialer Richtung ein außerordentlich kompakter Aufbau möglich. Durch den Einsatz des vierwelligen Planetenradsatzes des Verbrennungsmotors und der elektrischen Maschine in der beschriebenen Anordnung lässt sich dennoch eine Vielzahl von Funktionen mit dem erfindungsgemäßen Hybridantriebssystem einfach und effizient realisieren.

Die vier genannten Wellen des vierwelligen Planetenradsatzes sind koaxial zueinander angeordnet. Die Drehachsen der vier genannten Wellen fallen somit zu einer Drehachse des vierwelligen Planetenradsatzes zusammen. Der im Folgenden verwendete Begriff "axial" bezieht sich auf die Drehachse des vierwelligen Planetenradsatzes. Diese Drehachse des vierwelligen Planetenradsatzes wird hier als eine Hauptdrehachse betrachtet. Auch der im Folgenden verwendete Begriff "axiale Richtung" bezieht sich auf die Richtung der Hauptdrehachse. Da der vierwellige Planetenradsatz koaxial zu der Kurbelwelle des Verbrennungsmotors angeordnet ist, fällt auch die Drehachse der Kurbelwelle des Verbrennungsmotors mit der Hauptdrehachse zusammen.

Die beiden genannten Stirnradteilgetriebe und der vierwellige Planetenradsatz bilden zusammen ein Getriebe. Das Getriebe ist hinsichtlich eines von dem Verbrennungsmotor ausgehenden Drehmomentenstroms zwischen dem Verbrennungsmotor und einem auch als Differential bezeichneten Achsgetriebe angeordnet. Ebenso ist das Getriebe hinsichtlich eines von der elektrischen Maschine ausgehenden Drehmomentenstroms zwischen der elektrischen Maschine und dem Achsgetriebe angeordnet.

Drehfest im Sinne der Erfindung ist so definiert, dass unter einer drehfesten Verbindung oder Kopplung zweier drehbar gelagerter Elemente zu verstehen ist, dass diese beiden Elemente koaxial zueinander angeordnet sind und derart miteinander verbunden sind, dass sie mit derselben Winkelgeschwindigkeit umlaufen. Im Rahmen dieser Erfindung ist auch dann von einer drehfesten Verbindung zweier Elemente die Rede, wenn zwischen den beiden Elementen zum Beispiel ein Schwingungsdämpfer oder Torsionsdämpfer angeordnet ist, der, insbesondere bei ruckartigen Drehzahländerungen, geringe Verdrehungen zwischen den beiden Elementen erlaubt.

Eine besonders vorteilhafte Anordnung von Teilen des Hybridantriebssystems ergibt sich, wenn hinsichtlich eines von dem Verbrennungsmotor ausgehenden Drehmomentenstroms der Verbrennungsmotor, der vierwellige Planetenradsatz und die beiden genannten Stirnradteilgetriebe in der genannten Reihenfolge nacheinander angeordnet sind. In einem entsprechenden Betrieb des Hybridantriebssystems werden somit Drehmomente, ausgehend von dem Verbrennungsmotor zunächst in den vierwelligen Planetenradsatz und von dort in eines der beiden genannten Stirnradteilgetriebe eingeleitet. Hinsichtlich des Drehmomentenstroms ist nach den beiden genannten Stirnradteilgetrieben vorteilhaft das Achsgetriebe angeordnet.

Hinsichtlich eines von der elektrischen Maschine ausgehenden Drehmomentenstroms ist der vierwellige Planetenradsatz vorteilhaft nach der elektrischen Maschine und vor den beiden Stirnradteilgetrieben angeordnet.

Das Verblockungsschaltelement selbst kann beispielsweise als Reibkupplung ausgebildet sein, um so eine Verblockung der Elemente auch bei unterschiedlichen Drehzahlen der entsprechenden Wellen des Planetenradsatzes zu ermöglichen. Gemäß einer besonders günstigen und vorteilhaften Ausgestaltung kann es jedoch auch vorgesehen sein, dass das Verblockungsschaltelement als formschlüssige Kupplung ausgeführt ist. Eine solche formschlüssige Kupplung, welche insbesondere auf jegliche Art von Synchronisierungselementen verzichtet, lässt sich besonders einfach und kompakt aufbauen. Sie arbeitet weitgehend verschleißfrei und erlaubt durch den Einsatz der elektrischen Maschine, welche mit der zweiten Welle des vierwelligen Planetenradsatzes gekoppelt oder koppelbar ist, bei Bedarf eine Anpassung der Drehzahlen, um so auch mit der formschlüssig ausgestalteten Kupplung als Verblockungsschaltelement ein komfortables und zuverlässiges Schalten zu ermöglichen.

Gemäß einer außerordentlich günstigen Weiterbildung der erfindungsgemäßen Hybridantriebsvorrichtung kann es auch vorgesehen sein, dass genau eine Vorgelegewelle mit einem drehfest mit ihr verbundenen Abtriebsrad vorgesehen ist, wobei dieses Abtriebsrad axial überlappend zu dem Planetenradsatz angeordnet ist. Die eine Vorgelegewelle erlaubt einen quer zur axialen Richtung sehr kompakten Aufbau des Getriebes. Die Anordnung des drehfest mit ihr verbundenen Abtriebsrads, welches also als Festrad ausgebildet ist, axial überlappend zu dem Planetenradsatz erlaubt, anders als im Stand der Technik, einen in axialer Richtung sehr kompakten Aufbau. Hierdurch kann das Differential sehr nah an den Verbrennungsmotor rücken, was den kompakten Aufbau und die ideale Ausnutzung des in einem Fahrzeug typischerweise vorhandenen Bauraums vorteilhaft fördert. Dadurch wird insbesondere ein Einbau quer zur Fahrtrichtung einfach möglich.

Der Ausdruck, dass zwei Elemente "axial überlappend" angeordnet sind, bedeutet im Rahmen der vorliegenden Erfindung, dass die beiden Elemente jeweils zumindest teilweise in einem gleichen axialen Bereich oder axialen Abschnitt angeordnet sind. Der axiale Bereich ist dabei durch ein Koordinatenintervall auf einer Bezugsachse, hier die Hauptdrehachse, definiert, wobei Koordinaten der beiden anderen Raumrichtungen beliebig sind.

Der Verbrennungsmotor bzw. seine Kurbelwelle kann dabei gemäß einer vorteilhaften Ausgestaltung des erfindungsgemäßen Hybridantriebssystems über eine Trennkupplung mit der ersten Welle des Planetenradsatzes drehfest verbindbar sein. Ergänzend oder auch kompakt integriert mit der Trennkupplung kann dabei ein Zweimassenschwungrad zum Dämpfen bzw. Tilgen von Drehschwingungen vorgesehen werden. Auch alternative Aufbauten von Drehschwingungsdämpfern sind denkbar. Die Trennkupplung selbst erlaubt durch das Trennen des Getriebes bzw. Planetenradsatzes von dem Verbrennungsmotor einen rein elektrischen Betrieb des Hybridantriebssystems, was die Möglichkeiten zur Steigerung der Funktionalität des erfindungsgemäßen Hybridantriebssystems entsprechend erhöht. Die Trennkupplung selbst kann dabei formschlüssig oder auch reibschlüssig ausgebildet sein. Sie kann insbesondere auch formschlüssig ohne eine Synchronisierung realisiert werden, um sie so besonders einfach und kompakt in ihrem Aufbau gestalten zu können.

Die elektrische Maschine oder zumindest ein Rotorrad des Rotors der elektrischen Maschine sind dabei in axialer Richtung gesehen überlappend zu dem Planetenradsatz angeordnet. Auch diese Anordnung der elektrischen Maschine, welche vorzugsweise achsparallel zu den Eingangsachsen der beiden Stirnradteilgetriebe und der Kurbelwelle angeordnet ist, erlaubt einen in axialer Richtung sehr kompakten Aufbau. Mit dem Rotorrad ist ein drehfest mit dem Rotor verbundenes Zahnrad gemeint, über welches Drehmomente, die von der elektrischen Maschine ausgehen, zu dem vierwelligen Planetenradsatz übertragen werden können.

Gemäß einer vorteilhaften Weiterbildung kann die Anbindung der elektrischen Maschine dabei über weitere Getriebeelemente wie ein Stirnradgetriebe, ein Riementrieb, ein Kettenantrieb oder dergleichen erfolgen.

Alternativ dazu kann die elektrische Maschine jedoch auch koaxial angeordnet sein, beispielsweise koaxial zu dem Planetenradsatz, wobei dann vorzugsweise das Hohlrad des Planetenradsatzes die zweite Welle ausbildet, welche mit dem Rotorrad der elektrischen Maschine gekoppelt ist oder unmittelbar einen Teil des Rotors der elektrischen Maschine, bei einer solchen koaxialen Anordnung derselben, ausbildet.

Eine außerordentlich günstige Weiterbildung des erfindungsgemäßen Hybridantriebssystems kann es nun vorsehen, dass ein Schaltelement für das erste Stirnradteilgetriebe koaxial zu der Vorgelegewelle und axial zwischen den Stirnradpaarungen angeordnet ist. Eine solche Anordnung eines Schaltelements für das erste Stirnradteilgetriebe koaxial zu der Vorgelegewelle nutzt also ein Festrad im Bereich der Eingangswelle in der ersten Stirnradpaarung und dementsprechend ein Losrad auf der wenigstens einen, gemäß der oben beschriebenen Ausgestaltung der genau einen, Vorgelegewelle. Prinzipiell könnte ein solches Schaltelement in jeder axialen Position auf der Vorgelegewelle koaxial zu dieser angeordnet sein. Besonders bevorzugt befindet es sich zwischen den beiden Stirnradpaarungen.

Unter koaxial im Sinne der hier vorliegenden Erfindung ist dabei ein drehbar gelagertes Element koaxial zu einem anderen drehbar gelagerten Element, wie beispielsweise einer Welle, zu verstehen, so dass die Drehachsen der beiden Elemente jeweils deckungsgleich oder fluchtend sind. Ferner ist es gemäß der Erfindung so, dass unter einer Radpaarung bzw. Stirnradpaarung eine Anzahl von zwei miteinander kämmenden Zahnrädern bzw. Stirnrädern zu verstehen ist, welche parallele Drehachsen aufweisen und bezogen auf eine Ebene, welche senkrecht zu diesen Drehachsen steht, in einer gemeinsamen Ebene, welche als Radsatzebene bezeichnet wird, angeordnet sind.

Gemäß einer außerordentlich günstigen Weiterbildung gilt vergleichbares für ein zweites Schaltelement für das zweite Stirnradteilgetriebe, welches vorzugsweise ebenfalls koaxial zu der Vorgelegewelle und insbesondere axial zwischen den Stirnradpaarungen angeordnet ist. Dieser Aufbau schafft also bei beiden Stirnradteilgetrieben einen Aufbau mit Festrädern im Bereich der jeweiligen Eingangswellen, welche das Verblockungsschaltelement in axialer Richtung zwischen den Festrädern einschließen und den entsprechenden Losrädern auf der vorzugsweise genau einen Vorgelegewelle. Dabei sind die beiden Schaltelemente bevorzugt axial zwischen den Stirnradpaarungen angeordnet, nutzen also in axialer Richtung denselben Bauraum wie das Verblockungsschaltelement, so dass kein zusätzlicher Bauraum in axialer Richtung benötigt wird.

Die beiden Schaltelemente können dabei gemäß einer sehr günstigen Weiterbildung dieser Ideen einen gemeinsamen Gleichlaufkörper aufweisen, um so einen möglichst einfachen und wiederum in axialer Richtung kompakten Aufbau zu realisieren. Vorzugsweise kann dabei gemäß einer sehr vorteilhaften Weiterbildung dieser Variante des erfindungsgemäßen Hybridantriebssystems eine gemeinsame Schiebemuffe vorgesehen werden, um so auch den Aufwand hinsichtlich der Bauteile und der Aktuatorik nochmals zu reduzieren.

Eine vorteilhafte Ausgestaltung des erfindungsgemäßen Hybridantriebssystems sieht es nun vor, dass die erste Welle des vierwelligen Planetenradsatzes die erste Sonne, die zweite Welle das Hohlrad, die dritte Welle die zweite Sonne und die vierte Welle der Steg, hier also der Doppelsteg, ist. Eine solche Ausbildung erlaubt also die entsprechende Nutzung des Hohlrads als zweite Welle zur Anbindung der elektrischen Maschine, so dass sowohl eine Anbindung über ein Getriebeelement wie ein Stirnradgetriebe, ein Riemen- oder Kettentrieb oder dergleichen denkbar ist. Die Drehachse eines Rotors der elektrischen Maschine liegt dann also achsparallel zur Drehachse der Kurbelwelle des Verbrennungsmotors. Oder es erlaubt alternativ dazu auch eine entsprechende Integration des Planetenradsatzes in die elektrische Maschine, so dass deren Rotor das Hohlrad des vierwelligen Planetenradsatzes ausbildet, und die elektrische Maschine koaxial zur Hauptdrehachse des Getriebes angeordnet ist. Über die erste Sonne und die erste Welle erfolgt dann der Antrieb über den Verbrennungsmotor, die zweite Sonne und der Steg treiben entsprechend ab, bilden also die Eingangswellen der beiden Stirnradteilgetriebe, welche insbesondere über das Verblockungsschaltelement drehfest miteinander verbindbar sind.

Gemäß einer alternativen jedoch nicht weniger vorteilhaften Ausgestaltung kann auch die erste Welle des Planetenradsatzes das Hohlrad, die zweite Welle die zweite Sonne, die dritte Welle der Steg und die vierte Welle die erste Sonne sein. Auch in dieser Konstellation ist ein vorteilhafter Betrieb der erfindungsgemäßen Hybridantriebsvorrichtung mit dem vierwelligen Planetenradsatz möglich.

Letztlich ist der vierwellige Planetenradsatz in den beiden Varianten so ausgeführt, dass die erste Welle in Bezug auf die dritte und die vierte Welle die Summenwelle darstellt, sobald die beiden mit der dritten und der vierten Welle verbundenen Stirnradteilgetriebe aktiv geschaltet sind. Ihre entsprechenden Schaltelemente sind also geschlossen und die elektrische Maschine stellt kein signifikantes Drehmoment zur Verfügung. Die dritte mit dem ersten Stirnradteilgetriebe drehfest verbundene Welle des Planetenradsatzes stellt dabei in Bezug auf die zweite Welle und die erste Welle die Summenwelle dar, sobald eine Gangstufe im ersten Stirnradteilgetriebe aktiv geschaltet ist, und das Schaltelement des anderen Stirnradteilgetriebes offen ist, wobei die elektrische Maschine dabei ein signifikantes Drehmoment zur Verfügung stellt.

Weitere vorteilhafte Ausgestaltungen des erfindungsgemäßen Hybridantriebssystems ergeben sich auch aus den beiden Ausführungsbeispielen, welche nachfolgend unter Bezugnahme auf die Figuren näher beschrieben sind.

Dabei zeigen:
- Fig. 1: eine schematische Darstellung einer ersten möglichen Ausführungsform des erfindungsgemäßen Hybridantriebssystems;
- Fig. 2: einen Ausschnitt aus einer alternativen Ausführungsform des erfindungsgemäßen Hybridantriebssystems; und
- Fig. 3: eine Schalttabelle zur Erläuterung der möglichen Zustände der erfindungsgemäßen Hybridantriebssysteme in Figur 1 und Figur 2.

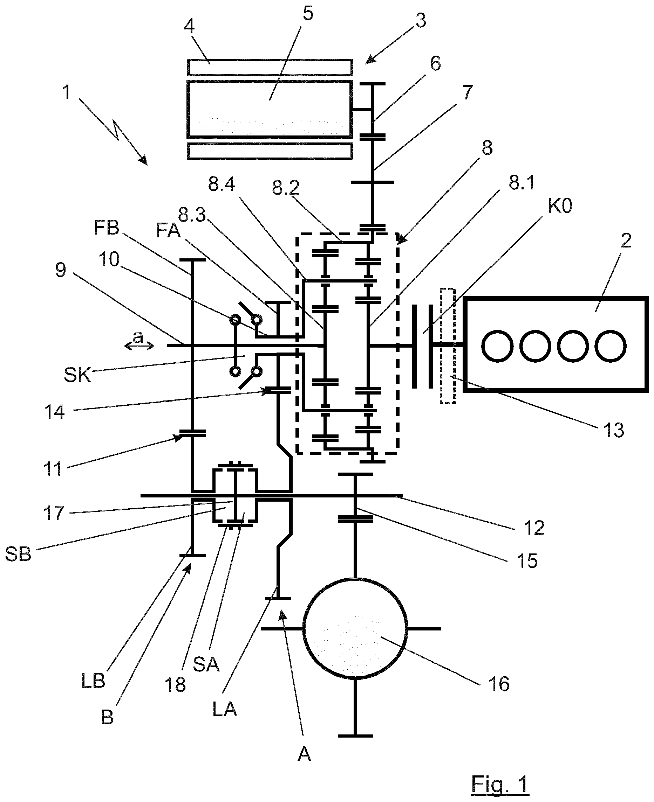

In der Darstellung der Figur 1 ist ein Hybridantriebssystem 1 zu erkennen, welches einen angedeuteten Verbrennungsmotor 2 sowie eine elektrische Maschine 3 mit einen Stator 4 und einen Rotor 5 umfasst. Der Rotor 5 ist drehfest mit einem Rotorrad 6 verbunden, welches über ein Zwischenrad 7 als Getriebeelement an einen vierwelligen Planetenradsatz 8 angebunden ist. Der vierwellige Planetenradsatz 8 umfasst dabei eine erste Welle bzw. ein erstes Element 8.1, welches hier durch die erste Sonne gebildet wird.

Ein zweites Element 8.2 ist dabei mit dem Zwischenrad 7 gekoppelt und wird durch ein Hohlrad des Planetenradsatzes 8 ausgebildet. Neben diesen beiden Wellen 8.1 und 8.2 wird eine dritte Welle bzw. ein drittes Element 8.3 des Planetenradsatzes 8 durch eine zweite Sonne gebildet und ist drehfest mit einer ersten Eingangswelle 9 eines ersten Stirnradteilgetriebes B verbunden. Ein Steg bzw. Doppelsteg als vierte Welle bzw. viertes Element 8.4 des Planetenradsatzes 8 ist drehfest mit einer zweiten Eingangswelle 10 eines zweiten Stirnradteilgetriebes A verbunden.

Die erste Welle bzw. das erste Element 8.1 des Planetenradsatzes 8 ist über eine Trennkupplung K0 und einen optionalen Drehschwingungsdämpfer 13 mit einer nicht bezeichneten Kurbelwelle des Verbrennungsmotors 2 verbindbar. Bei geschlossener Trennkupplung K0, welche vorzugsweise als formschlüssige Kupplung ohne Synchronisierung ausgeführt sein kann, lässt sich der Verbrennungsmotor 2 bzw. seine Kurbelwelle also mit der ersten Welle 8.1 bei Bedarf koppeln.

Über die erste Eingangswelle 9 wird ein koaxial und drehfest zu dieser angeordnetes erstes Festrad FB angetrieben, welches ein erstes Losrad LB treibt, die zusammen eine Stirnradpaarung 11 ausbilden. Diese Stirnradpaarung 11 ist dabei die einzige Stirnradpaarung des ersten Stirnradteilgetriebes B, deren Losrad LB koaxial zu einer Vorgelegewelle 12 angeordnet und bei Bedarf über ein Schaltelement SB drehfest mit dieser verbindbar ist. Das zweite Stirnradteilgetriebe A umfasst ein Festrad FA auf der mit der dritten Welle 8.3 des Planetenradsatzes 8 verbundenen zweiten Eingangswelle 10, welche koaxial zu der ersten Eingangswelle 9 als um diese herum ausgebildete Hohlwelle, realisiert ist. Ein Losrad LA komplettiert dann eine Stirnradpaarung 14 und damit das zweite Stirnradteilgetriebe A, welches ausschließlich diese eine Stirnradpaarung 14 umfasst. Über ein Schaltelement SA ist auch dieses Losrad LA mit der Vorgelegewelle 12 bei Bedarf drehfest verbindbar.

Die Vorgelegewelle 12 trägt ihrerseits in einem Abschnitt in axialer Richtung a, welche sich immer auf die Drehachse der Kurbelwelle des Verbrennungsmotors und damit die Hauptdrehachse der Stirnradteilgetriebe A, B bezieht, überlappend zu dem Planetenradsatz 8 ein Abtriebsrad 15 angeordnet. Dieses kämmt mit einem hier schematisch angedeuteten, auch als Achsgetriebe bezeichneten, Differential 16, über welches eine angetriebene Achse eines mit dem Hybridantriebssystems 1 ausgestatteten Fahrzeugs angetrieben wird.

Die beiden Schaltelemente SA, SB sind in dem hier dargestellten Ausführungsbeispiel zu einem kombinierten speziellen Schaltelement zusammengefasst, welches auch als SAB bezeichnet werden könnte. Dieses umfasst einen gemeinsamen Gleichlaufkörper 17, sowie in dem hier dargestellten Ausführungsbeispiel eine gemeinsame Schiebemuffe 18. Neben der prinzipiell auch denkbaren Ausgestaltung der Schaltelemente als Reibschaltelemente ist diese Variante mit einer Ausgestaltung der Schaltelemente SA und SB als kombiniertes Schaltelement mit einer gemeinsamen Schiebemuffe 18 und einer formschlüssigen Schaltung über einen einzigen Aktuator ideal. Bezüglich der Anordnung kann es vorzugsweise zwischen den beiden Stirnradpaarungen 11, 14 angeordnet sein. Es kann über verschiedene Schaltstellungen verfügen. So kann einerseits das erste Losrad LB mit der Vorgelegewelle 12 und damit dem Abtrieb über das Abtriebsrad 15 verbunden werden, als auch das andere Losrad LA. Außerdem können beide Losräder mit der Vorgelegewelle 12 verbunden werden. Optional ist auch eine weitere Schaltstellung denkbar, bei welcher die Schiebemuffe 18 so verschoben wird, dass sie nur noch mit einem der Losräder, beispielsweise dem Losrad LA verbunden ist, so dass keine Verbindung zur Vorgelegewelle 12 besteht und somit ein Neutralgang vorliegt, bei welchem der Abtrieb entkoppelt ist.

Zwei der Elemente des Planetenradsatzes 8, beispielsweise in dem hier dargestellten Ausführungsbeispiel die dritte Welle 8.3 und die vierte Welle 8.4 bzw. die mit ihr drehfest verbundene erste Eingangswelle 9 bzw. zweite Eingangswelle 10 können über ein Verblockungsschaltelement SK miteinander verbunden werden, welches hier wiederum vorzugsweise als formschlüssiges Schaltelement ohne Synchronisierung ausgebildet ist. Bei der entsprechenden Drehzahl der Elemente kann so eine Relativbewegung zwischen den Elementen des Planetenradsatzes durch eine Verbindung des Stegs als viertes Element 8.4 mit der zweiten Sonne als drittes Element 8.3 realisiert werden. Der Planetenradsatz 8 läuft dann als Block um, weshalb das Schaltelement SK gängigerweise als Verblockungsschaltelement bezeichnet wird.

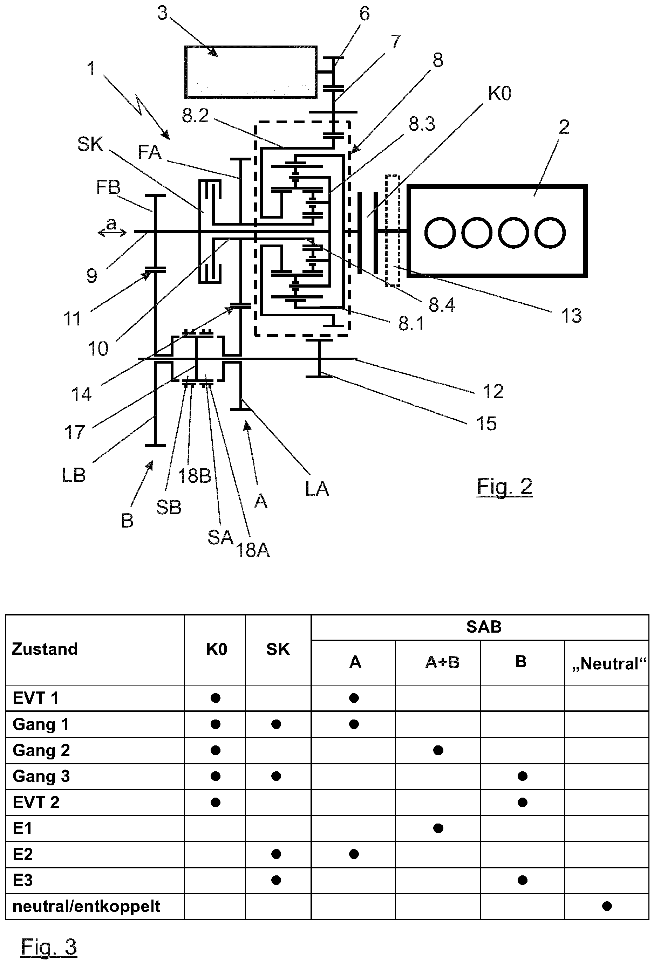

Ein alternativer Aufbau des Hybridantriebssystems 1 ist anhand der Darstellung in Figur 2, welche einen Ausschnitt des Hybridantriebselements 1, im Gegensatz zur Darstellung in Figur 1 ohne das Differential 16, zeigt, dargestellt. Alle relevanten Elemente haben dabei dieselben Bezugszeichen wie zuvor und werden nur bzgl. der Unterschiede nochmals erläutert. Der Planetenradsatz 8 ist hier so ausgeführt, dass die erste über die Trennkupplung K0 mit dem Verbrennungsmotor 2 verbindbare Welle 8.1 des Planetenradsatzes 8 durch das Hohlrad gebildet wird. Die zweite mit der elektrischen Maschine 3 verbundene Welle 8.2 wird durch die zweite Sonne gebildet. Die dritte Welle 8.3 ist hier der Steg bzw. Doppelsteg, welcher als drittes Element wiederum mit der ersten Eingangswelle 9 des ersten Stirnradteilgetriebes B in Verbindung steht. Das verbleibende Element des Planetenradsatzes 8 ist die erste Sonne, welche als vierte Welle 8.4 mit der zweiten Eingangswelle 10 des zweiten Stirnradteilgetriebes B entsprechend verbunden ist.

Die beiden Stirnradteilgetriebe A, B sind dabei im Wesentlichen wiederum so wie in der Darstellung der Figur 1 aufgebaut. Die beiden Schaltelemente SB und SA zum Verbinden der Losräder LB und LA mit der Vorgelegewelle 12 sind in diesem Fall mit dem gemeinsamen Gleichlaufkörper 17 aber getrennten Schiebemuffen 18A, 18B und Aktuatoren ausgestattet, so dass getrennt voneinander entweder das Schaltelement SA oder das Schaltelement SB oder beide aktiviert werden können. In der hier dargestellten Schaltvariante der beiden Schaltmuffen 18A, 18B ist dabei der Neutralgang eingelegt und der Antrieb von dem Abtriebsrad 15 bzw. der Vorgelegewelle 12 entkoppelt. Neben diesen Unterschieden ist außerdem das Verblockungsschaltelement SK in dem hier dargestellten Ausführungsbeispiel als Reibkupplung ausgebildet. Alle drei Unterschiede ließen sich so jeweils einzeln auch mit den entsprechenden Ausführungsvarianten aus dem Ausführungsbeispiel der Figur 1 kombinieren also beispielsweise das kombinierte Schaltelement SAB mit der hier dargestellten Konstellation des Planetenradsatzes 8 oder die Ausgestaltung des Verblockungsschaltelements SK als Reibkupplung mit der Konstellation des Planetenradsatzes 8 aus Figur 1 usw.

Beide beschriebenen Varianten des Ausführungsbeispiels des Hybridantriebssystems 1 erlauben nun verschiedene nachfolgend anhand der Tabelle in Figur 3 erläuterte Zustände. Dabei ist jeweils durch einen Punkt eine geschlossene Kupplung oder ein geschlossenes Schaltelement oder der entsprechend in der Tabelle eingetragene Zustand dargestellt.

Ein erster kombinierter Zustand bei welchem sowohl verbrennungsmotorisch als auch elektromotorisch auf das Hybridantriebssystem 1 eingewirkt werden kann, ist mit EVT1 bezeichnet. Dabei werden die Drehmomente bzw. Drehzahlen des Verbrennungsmotors 2 und der elektrischen Maschine 3 am Planetenradsatz 8 überlagert, gleichzeitig ist das Schaltelement SA geschlossen, das Schaltelement SB geöffnet. Dieser Zustand kann beispielsweise zum Anfahren eines Fahrzeugs mit dem Hybridantriebssystem 1 im hybridischen Modus erfolgen. Dabei sind sowohl der Verbrennungsmotor 2 als auch die elektrische Maschine 3 beteiligt. Durch Drehmoment vom Verbrennungsmotor 2 und einen zu Beginn generatorischen Betrieb der elektrischen Maschine 3 kann je nach Ansteuerung der elektrischen Maschine 3 das Drehmoment, welches zum Antrieb gelangt, zunehmend vergrößert werden, indem die generatorische Leistung an der elektrischen Maschine 3 entsprechend reduziert wird. Hierdurch lässt sich ein elektrodynamisches Anfahren realisieren. Im weiteren Verlauf kann die elektrische Maschine 3 dann auch motorisch betrieben werden. Neben diesem Anfahren eines Fahrzeugs mit dem Hybridantriebssystem 1 dient der erste EVT-Modus EVT1 unter anderem auch der aktiven Übersetzungsverstellung sowie einer Drehzahlsynchronisierung innerhalb des Schaltelements SB, insbesondere beim Wechsel von dem ersten auf den zweiten Gang, welcher nachfolgend noch beschrieben ist. Im ersten Gang wird dann der Planetenradsatz 8 entsprechend verblockt indem das Verblockungsschaltelement SK geschlossen wird, entweder bei durch die elektrische Maschine 3 ansynchronisierter gleicher Drehzahl der beteiligten Elemente über ein formschlüssiges Kupplungselement oder wie in der Darstellung der Figur 2 angedeutet, über das reibschlüssige Kupplungselement, welches hier das Verblockungsschaltelement ausbildet.

Unter zur Hilfenahme der oben bereits angesprochenen Synchronisierung im Bereich des Schaltelements SB wird beim Wechsel von dem ersten auf den zweiten Gang einerseits die Verblockungskupplung SK geöffnet und das Schaltelement SB zusätzlich zum Schaltelement SA geschlossen bzw. bei einer gemeinsamen Schiebemuffe 18 diese in die entsprechende Stellung verschoben.

Um vom zweiten Gang dann in den dritten Gang zu kommen wird das Schaltelement SA geöffnet bzw. die gemeinsame Schiebemuffe 18 entsprechend verschoben und gleichzeitig das Verblockungsschaltelement SK wieder geschlossen, so dass die beiden Eingangswellen 9, 10 und der Planetenradsatz 8 entsprechend verblockt sind.

Im zweiten EVT-Modus werden dann bei geöffnetem Verblockungsschaltelement SK, geöffnetem Schaltelement SA und geschlossenem Schaltelement SB die Drehzahlen und Drehmomente des Verbrennungsmotors 2 und der elektrischen Maschine 3 am Planetenradsatz 8 entsprechend überlagert. Dieser zweite EVT-Modus EVT2 dient dabei insbesondere als Overdrive-Modus und stellt eine entsprechende "lange" Übersetzung bereit. Er dient ebenfalls der aktiven Übersetzungsverstellung und kann für eine Drehzahlsynchronisierung innerhalb des Verblockungsschaltelements SK beim Wechsel vom zweiten auf den dritten Gang eingesetzt werden, wenn dieses, wie es in der Darstellung der Figur 1 zu erkennen ist, als formschlüssiges Schaltelement ohne Synchronisierung ausgebildet ist. Auch in diesem Modus kann die elektrische Maschine sowohl generatorisch als auch motorisch betrieben werden.

Die weiteren Zustände E1, E2 und E3 sind dann elektrische Gänge, welche bei geöffneter Trennkupplung K0 im Falle von E1 mit eingelegten Schaltelementen SA und SB realisiert werden. Beim Wechseln von E1 auf E2 wird das Schaltelement SB geöffnet und der Planetenradsatz 8 verblockt, beim weiteren Wechseln in E3 wird dann das Schaltelement SA geöffnet und das Schaltelement SB entsprechend geschlossen.

Wie bereits erwähnt, können beide beschriebenen Ausführungsvarianten des erfindungsgemäßen Hybridantriebssystems über eine "Neutral"-Stellung verfügen, bei welcher die Vorgelegewelle und damit der Abtrieb über das Abtriebsrad 15 entkoppelt ist. Hierfür werden die beiden Schaltelemente SA und SB in der Darstellung der Figur 2 so betätigt, dass ihre jeweiligen Schiebemuffen 18A und 18B lediglich mit einem der Losräder LA, LB oder wie es in der Darstellung der Figur 2 zu erkennen ist, mit dem gemeinsamen Gleichlaufelement 17 in Verbindung stehen, nicht jedoch mit dem jeweiligen Losrad LA, LB. In der Darstellung der Figur 1 lässt sich diese Neutralstellung dadurch erreichen, dass die Schiebemuffe 18 beispielsweise in Richtung des Losrads LA entsprechend verschoben wird, so dass sie nur noch mit diesem in Verbindung steht, wofür in der Darstellung der Figur 1 das Losrad LA mit einer entsprechenden Auskragung um die Vorgelegewelle 12 herum ausgebildet ist, um hier das Schaffen des benötigten Bauraums auch zeichnerisch anzudeuten.

## Patentansprüche

1. Hybridantriebssystem (1) mit einem Verbrennungsmotor (2) und einer elektrischen Maschine (3), mit einem ersten Stirnradteilgetriebe (B) und einem zweiten Stirnradteilgetriebe (A), welche über wenigstens eine Vorgelegewelle (12) abtreiben, sowie einem koaxial zu einer Kurbelwelle des Verbrennungsmotors (2) angeordneten vierwelligen Planetenradsatz (8), nämlich mit einer ersten Welle (8.1), einer zweiten Welle (8.2), einer dritten Welle (8.3) und einer vierten Welle (8.4), wobei die erste Welle (8.1) mit der Kurbelwelle des Verbrennungsmotors (2) derart gekoppelt oder koppelbar ist, dass Drehmomente, ausgehend von dem Verbrennungsmotor (2) über die erste Welle (8.1) in den Planetenradsatz (8) eingeleitet werden können, wobei ein Rotor (5) der elektrischen Maschine (3) derart mit der zweiten Welle (8.2) gekoppelt oder koppelbar ist, dass Drehmomente, ausgehend von dem Rotor (5) über die zweite Welle (8.2) in den Planetenradsatz (8) eingeleitet werden können, wobei eine erste Eingangswelle (9) des erstens Stirnradteilgetriebes (B) drehfest mit der dritten Welle (8.3) verbunden ist, wobei eine zweite Eingangswelle (10) des zweiten Stirnradteilgetriebes (A) drehfest mit der vierten Welle (8.4) verbunden ist, und wobei das erste und das zweite Stirnradteilgetriebe (B, A) jeweils genau eine Stirnradpaarung (11, 14) aufweisen,
**dadurch gekennzeichnet, dass** ein Verblockungsschaltelement (SK) zum drehfesten Verbinden von zwei der Wellen (8.1, 8.2, 8.3, 8.4) des Planetenradsatzes (8) in einer axialen Richtung (a), bezogen auf eine Drehachse der Eingangswellen (9, 10), gesehen zwischen den beiden Stirnradpaarungen (11, 14) angeordnet ist.

2. Hybridantriebssystem (1) nach Anspruch 1,
**dadurch gekennzeichnet, dass**
hinsichtlich eines von dem Verbrennungsmotor (2) ausgehenden Drehmomentenstroms der Verbrennungsmotor (2), der vierwellige Planetenradsatz (8) und die beiden genannten Stirnradteilgetriebe (A; B) in der genannten Reihenfolge nacheinander angeordnet sind.

3. Hybridantriebssystem (1) nach Anspruch 1 oder 2,
**dadurch gekennzeichnet, dass**
das Verblockungsschaltelement (SK) als formschlüssige Kupplung ausgeführt ist.

4. Hybridantriebssystem (1) nach einem der vorhergehenden Ansprüche,
**dadurch gekennzeichnet, dass**
genau eine Vorgelegewelle (12) mit einem drehfest mit ihr verbundenen Abtriebsrad (15) vorgesehen ist, wobei das Abtriebsrad (15) hinsichtlich der axialen Richtung (a) axial überlappend zu dem Planetenradsatz (8) angeordnet ist.

5. Hybridantriebssystem (1) nach einem der vorhergehenden Ansprüche,
**dadurch gekennzeichnet, dass**
die Kurbelwelle des Verbrennungsmotors (2) über eine Trennkupplung (K0) mit der ersten Welle (8.1) des Planetenradsatzes (8) drehfest verbunden werden kann.

6. Hybridantriebssystem (1) nach einem der vorhergehenden Ansprüche,
**dadurch gekennzeichnet, dass**
die elektrische Maschine (3) oder ein mit ihrem Rotor (5) drehfest verbundenes Rotorrad (6) in axialer Richtung (a) gesehen, überlappend zu dem Planetenradsatz (8) angeordnet ist.

7. Hybridantriebssystem (1) nach einem der vorhergehenden Ansprüche,
**dadurch gekennzeichnet, dass**
die elektrische Maschine (3) über weitere Getriebeelemente (7) mit der zweiten Welle (8.2) des Planetenradsatzes (8) verbunden ist.

8. Hybridantriebssystem (1) nach einem der vorhergehenden Ansprüche,
**dadurch gekennzeichnet, dass**
ein erstes Schaltelement (SB) koaxial zu der wenigstens einen Vorgelegewelle (12) und in axialer Richtung (a) zwischen den Stirnradpaarungen (11, 14) angeordnet ist.

9. Hybridantriebssystem (1) nach Anspruch 8,
**dadurch gekennzeichnet, dass**
ein zweites Schaltelement (SA) koaxial zu der wenigstens einen Vorgelegewelle (12) und in axialer Richtung (a) zwischen den Stirnradpaarungen (11, 14) angeordnet ist.

10. Hybridantriebssystem (1) nach Anspruch 9,
**dadurch gekennzeichnet, dass**
die beiden Schaltelemente (SA, SB) einen gemeinsamen Gleichlaufkörper (17) aufweisen.

11. Hybridantriebssystem (1) nach Anspruch 10,
**dadurch gekennzeichnet, dass**
die beiden Schaltelemente (SA, SB) eine gemeinsame Schiebemuffe (18) aufweisen.

12. Hybridantriebssystem (1) nach einem der Ansprüche 1 bis 11,
**dadurch gekennzeichnet, dass**
die erste Welle (8.1) des Planetenradsatzes (8) durch eine erste Sonne, die zweite Welle (8.2) durch ein Hohlrad, die dritte Welle (8.3) durch eine zweite Sonne und die vierte Welle (8.4) durch einen Steg des Planetenradsatzes (8) ausgebildet ist.

13. Hybridantriebssystem (1) nach einem der Ansprüche 1 bis 11,
**dadurch gekennzeichnet, dass**
die erste Welle (8.1) des Planetenradsatzes (8) durch ein Hohlrad, die zweite Welle (8.2) durch eine zweite Sonne, die dritte Welle (8.3) durch einen Steg und die vierte Welle (8.4) durch eine erste Sonne des Planetenradsatzes (8) gebildet ist.

## Claims

1. Hybrid drive system (1) comprising an internal combustion engine (2) and an electric machine (3), comprising a first spur gear sub-transmission (B) and a second spur gear sub-transmission (A), which drive via at least one countershaft (12), and a four-shaft planetary gearset (8) which is arranged coaxially to a crankshaft of the internal combustion engine (2) and which namely has a first shaft (8.1), a second shaft (8.2), a third shaft (8.3) and a fourth shaft (8.4), the first shaft (8.1) being coupled or couplable to the crankshaft of the internal combustion engine (2) such that torques originating from the internal combustion engine (2) can be introduced into the planetary gearset (8) via the first shaft (8.1), a rotor (5) of the electric machine (3) being coupled or couplable to the second shaft (8.2) such that torques originating from the rotor (5) can be introduced into the planetary gearset (8) via the second shaft (8.2), a first input shaft (9) of the first spur gear sub-transmission (B) being connected to the third shaft (8.3) for conjoint rotation, a second input shaft (10) of the second spur gear sub-transmission (A) being connected to the fourth shaft (8.4) for conjoint rotation, the first and the second spur gear sub-transmission (B, A) each having exactly one spur gear pair (11, 14),
**characterized in that** a blocking shifting element (SK) is arranged between the two spur gear pairs (11, 14) as seen in an axial direction (a), relative to an axis of rotation of the input shafts (9, 10), for connecting two of the shafts (8.1, 8.2, 8.3, 8.4) of the planetary gearset (8) for conjoint rotation.

2. Hybrid drive system (1) according to claim 1,
**characterized in that**
with respect to a torque flow originating from the internal combustion engine (2), the internal combustion engine (2), the four-shaft planetary gearset (8) and the two aforementioned spur gear sub-transmissions (A; B) are arranged one after the other in the aforementioned order.

3. Hybrid drive system (1) according to either claim 1 or claim 2,
**characterized in that**
the blocking shifting element (SK) is designed as an interlocking coupling.

4. Hybrid drive system (1) according to any of the preceding claims,
**characterized in that**
exactly one countershaft (12) is provided with a driven gear (15) connected thereto for conjoint rotation, the driven gear (15) being arranged axially overlapping the planetary gearset (8) with respect to the axial direction (a).

5. Hybrid drive system (1) according to any of the preceding claims,
**characterized in that**
the crankshaft of the internal combustion engine (2) can be connected via a separating clutch (KO) to the first shaft (8.1) of the planetary gearset (8) for conjoint rotation.

6. Hybrid drive system (1) according to any of the preceding claims,
**characterized in that**
the electric machine (3) or a rotor wheel (6) connected to the rotor (5) thereof for conjoint rotation is arranged overlapping the planetary gear set (8) as seen in the axial direction (a).

7. Hybrid drive system (1) according to any of the preceding claims,
**characterized in that**
the electric machine (3) is connected to the second shaft (8.2) of the planetary gearset (8) via further transmission elements (7).

8. Hybrid drive system (1) according to any of the preceding claims,
**characterized in that**
a first shifting element (SB) is arranged coaxially to the at least one countershaft (12) and in the axial direction (a) between the spur gear pairs (11, 14).

9. Hybrid drive system (1) according to claim 8,
**characterized in that**
a second shifting element (SA) is arranged coaxially to the at least one countershaft (12) and in the axial direction (a) between the spur gear pairs (11, 14).

10. Hybrid drive system (1) according to claim 9,
**characterized in that**
the two shifting elements (SA, SB) have a common synchronizing body (17).

11. Hybrid drive system (1) according to claim 10,
**characterized in that**
the two shifting elements (SA, SB) have a common sliding coupling (18).

12. Hybrid drive system (1) according to any of claims 1 to 11,
**characterized in that**
the first shaft (8.1) of the planetary gearset (8) is formed by a first sun gear, the second shaft (8.2) by a ring gear, the third shaft (8.3) by a second sun gear and the fourth shaft (8.4) by a planet carrier of the planetary gearset (8).

13. Hybrid drive system (1) according to any of claims 1 to 11,
**characterized in that**
the first shaft (8.1) of the planetary gearset (8) is formed by a ring gear, the second shaft (8.2) by a second sun gear, the third shaft (8.3) by a planet carrier and the fourth shaft (8.4) by a first sun gear of the planetary gearset (8).

## Revendications

1. Système d'entraînement hybride (1) comportant un moteur à combustion interne (2) et une machine électrique (3), comportant une première sous-transmission à roue droite (B) et une seconde sous-transmission à roue droite (A), qui fournissent une sortie par l'intermédiaire d'au moins un arbre intermédiaire (12), ainsi qu'un jeu de roues planétaires (8) à quatre arbres disposé coaxialement à un vilebrequin du moteur à combustion interne (2), le jeu de roues planétaires à quatre arbres comportant notamment un premier arbre (8.1), un deuxième arbre (8.2), un troisième arbre (8.3) et un quatrième arbre (8.4), dans lequel le premier arbre (8.1) est accouplé ou peut être accouplé au vilebrequin du moteur à combustion interne (2) de telle sorte que des couples, partant du moteur à combustion interne (2), peuvent être introduits dans le jeu de roues planétaires (8) par l'intermédiaire du premier arbre (8.1), dans lequel un rotor (5) de la machine électrique (3) est accouplé ou peut être accouplé au deuxième arbre (8.2) de telle sorte que des couples, partant du rotor (5), peuvent être introduits dans le jeu de roues planétaires (8) par l'intermédiaire du deuxième arbre (8.2), dans lequel un premier arbre d'entrée (9) de la première sous-transmission à roue droite (B) est relié de manière solidaire en rotation au troisième arbre (8.3), dans lequel un second arbre d'entrée (10) de la seconde sous-transmission à roue droite (A) est relié de manière solidaire en rotation au quatrième arbre (8.4) et dans lequel les première et seconde sous-transmissions à roue droite (B, A) présentent respectivement exactement une paire de roues droites (11, 14),
**caractérisé en ce qu'**un élément de commutation de blocage (SK) destiné à relier de manière solidaire en rotation deux des arbres (8.1, 8.2, 8.3, 8.4) du jeu de roues planétaires (8) est disposé entre les deux paires de roues droites (11, 14), vu dans une direction axiale (a) par rapport à un axe de rotation des arbres d'entrée (9, 10).

2. Système d'entraînement hybride (1) selon la revendication 1,
**caractérisé en ce que**
par rapport à un courant de couple sortant du moteur à combustion interne (2), le moteur à combustion interne (2), le jeu de roues planétaires (8) à quatre arbres et les deux sous-transmissions à roue droite (A ; B) mentionnées sont disposés successivement dans l'ordre indiqué.

3. Système d'entraînement hybride (1) selon la revendication 1 ou 2,
**caractérisé en ce que**
l'élément de commutation de blocage (SK) est réalisé sous la forme d'un accouplement à liaison de forme.

4. Système d'entraînement hybride (1) selon l'une des revendications précédentes,
**caractérisé en ce que**
il est prévu exactement un arbre intermédiaire (12) comportant une roue de sortie (15) reliée à celui-ci de manière solidaire en rotation, dans lequel la roue de sortie (15) est disposée axialement en chevauchement du jeu de roues planétaires (8) par rapport à la direction axiale (a).

5. Système d'entraînement hybride (1) selon l'une des revendications précédentes,
**caractérisé en ce que**
le vilebrequin du moteur à combustion interne (2) peut être relié de manière solidaire en rotation au premier arbre (8.1) du jeu de roues planétaires (8) par l'intermédiaire d'un accouplement de séparation (KO).

6. Système d'entraînement hybride (1) selon l'une des revendications précédentes,
**caractérisé en ce que**
la machine électrique (3) ou une roue de rotor (6) solidaire en rotation de son rotor (5) est disposée, vue dans la direction axiale (a), de manière à chevaucher le jeu de roues planétaires (8).

7. Système d'entraînement hybride (1) selon l'une des revendications précédentes,
**caractérisé en ce que**
la machine électrique (3) est reliée au deuxième arbre (8.2) du jeu de roues planétaires (8) par l'intermédiaire d'autres éléments de transmission (7).

8. Système d'entraînement hybride (1) selon l'une des revendications précédentes,
**caractérisé en ce que**
un premier élément de commutation (SB) est disposé coaxialement à l'au moins un arbre intermédiaire (12) et dans la direction axiale (a) entre les paires de roues droites (11, 14).

9. Système d'entraînement hybride (1) selon la revendication 8,
**caractérisé en ce que**
un second élément de commutation (SA) est disposé coaxialement à l'au moins un arbre intermédiaire (12) et dans la direction axiale (a) entre les paires de roues droites (11, 14).

10. Système d'entraînement hybride (1) selon la revendication 9,
**caractérisé en ce que**
les deux éléments de commutation (SA, SB) présentent un corps de synchronisation commun (17).

11. Système d'entraînement hybride (1) selon la revendication 10,
**caractérisé en ce que**
les deux éléments de commutation (SA, SB) présentent un manchon coulissant commun (18).

12. Système d'entraînement hybride (1) selon l'une des revendications 1 à 11,
**caractérisé en ce que**
le premier arbre (8.1) du jeu de roues planétaires (8) est formé par un premier soleil, le deuxième arbre (8.2) par une roue creuse, le troisième arbre (8.3) par un second soleil et le quatrième arbre (8.4) par un support du jeu de roues planétaires (8).

13. Système d'entraînement hybride (1) selon l'une des revendications 1 à 11,
**caractérisé en ce que**
le premier arbre (8.1) du jeu de roues planétaires (8) est formé par une roue creuse, le deuxième arbre (8.2) par un second soleil, le troisième arbre (8.3) par un support et le quatrième arbre (8.4) par un premier soleil du jeu de roues planétaires (8).
